# EUROPEAN PATENT SPECIFICATION

(11) **EP 2 461 466 B1**
(45) Date of publication and mention of the grant of the patent: **14.05.2014**
(21) Application number: 12157562.5
(22) Date of filing: 25.02.2005
(51) Int. Cl.: H02K 51/00, H02K 35/02, F03B 13/18, F03B 13/20, H02K 35/00, H02K 49/10

(54) **Power generator with magnetic transmission gear**
Generator mit Magnetgetriebe
Générateur avec engrenage de transmission magnétique

(30) Priority: 27.02.2004 GB 0404329
(43) Date of publication of application: 06.06.2012
(62) Divisional of application: 05251129.2
(73) Proprietor: National Renewable Energy Centre Limited, NE24 1LZ (GB)
(72) Inventor: Spooner, Edward, Durham, DL1 1SL (GB)
(74) Representative: Wilson, Peter

(56) References cited:
- DE-A1- 3 730 975
- GB-A- 2 054 977
- JP-U- 60 188 877
- US-A- 2 790 095
- US-A- 5 717 266

## Description

The present invention relates to magnetic force transmission and particularly, but not exclusively, to magnetic force transmission for use in sustainable power generation.

Sustainable power refers to power generation using means which do not use finite resources. Solar, wind, geothermal and wave power are all examples of sustainable power.

In wave power generation, mechanical wave motion is utilised to drive an electrical generator to create electrical power. There are many ways to convert the mechanical wave motion.

One of the most common methods is through an Oscillating Water Column (OWC). An OWC uses a column open to wave motion at the bottom. As water moves in and out of the column due to wave motion, air is sucked in and forced out of the column accordingly. A turbine is positioned at the top of the column which is driven by the moving air and thereby generates electrical power.

Other methods include:
- generating electricity through the harmonic motion of a floating part of a device in respect to a fixed part. One such device is known as the "Salter Duck" which has a shape similar to a wedge. A fixed generator is located in the "thick" end of the wedge. Wave motion moves the "thin" end up and down in relation to the fixed generator thereby generating electricity.
- generating electricity using an "over-topping" device. Over-topping devices focus or channel wave energy towards a central water holding tank. By focussing wave energy, the power take off mechanism can capture and access significantly greater wave energy than its dimensions imply. The focal point of the over topping device consists of a head wall upon which the incoming channelled waves break, resulting in water being thrown upwards and collected in a reservoir. The pressure head of this water causes turbines located in the floor of the reservoir to rotate. Over topping devices are large floating structures which require mooring.
- generating electricity using a membrane device. Membrane devices exploit the pressure differential in successive peaks and toughs to covert wave energy into fluid flow and pressure. A taut membrane is suspended over a frame so that changing water pressure causes the membrane to attenuate and this resultant movement may be used to pump water. Although primarily proposed for desalination purposes the water may be used to drive turbines and generators. The practical depth limitation that the device is capable of operating at is around 50m. Neutrally buoyant structures may be designed to float at a pre-defined depth, offering the ability to capture wave energy whilst being submerged without operating upon the seabed. As waves pass the membrane, compression and expansion occurs which can be used to pump sea water to shore under high pressure. It is on shore where this high-pressure water is converted to energy using conventional hydro technologies, which does not have to be marine qualified. By nature of being deeply submerged proposed systems of this type are not subject to the full energy contained within wave at the surface. As wave excitation rapidly decreases with depth systems of this kind are required to be of dimensional greater proportions than those employed towards or at the surface in order to experience similar power levels.
- generating electricity using a hydraulic and mechanical devices. Surface floating, partial or fully submerged buoys may be used to convert the vertical particle motion of propagating waves into electrical energy. In shallow water the hydrostatic buoyancy force of a moored buoy may be forced to react against a sea bed foundation via its mooring line(s). The force transmitted into the mooring line may be used to drive a generator either by hydraulic or mechanical means

US2,790,095 discloses a device for converting rotary motion into reciprocating motion.

One difficulty which any wave powered generator must address is that sea waves have a relatively low frequency which is not suitable for direct use in driving an electrical generator. Thus, some form of frequency conversion may be required.

The present invention provides a power generation system according to claim 1. Further aspects of the invention are defined by the dependent claims.

Embodiments of the present invention will now be described, by way of example only, with reference to the accompanying drawings, in which:
Fig. 1 shows a stator and translator according to an embodiment of the present invention;
Fig. 2 shows a graphical representation of magnetic force versus displacement;
Fig. 3 shows a wave power generation system according to an embodiment of the present invention;
Fig. 4 shows an alternative embodiment of a wave power generation system;
Fig. 5 shows stator and translator with a magnetic spring and coil generator according to an embodiment of the present invention;
Fig. 6 shows a number of different wave power generation system configurations;
Fig. 7 shows a horizontal configuration of a wave power generation system; and
Fig. 8 shows a circular configuration of a wave power generation system.

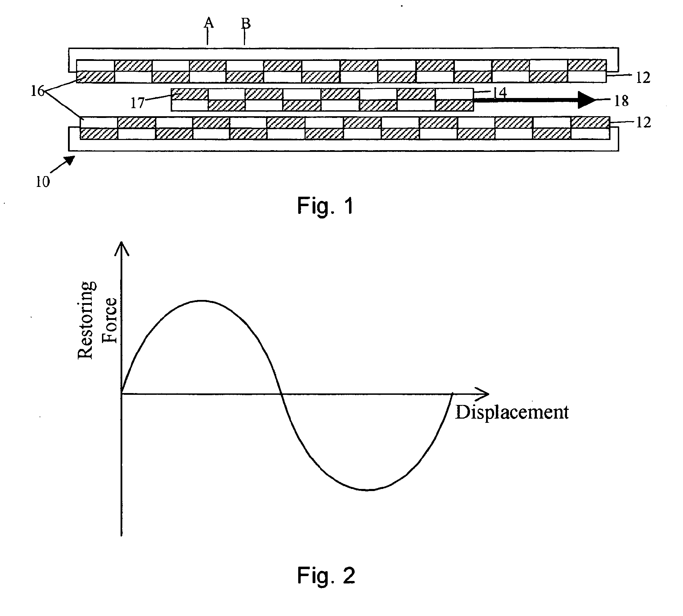

Referring to Fig. 1, a magnetic force transmission device 10 has a stator 12 and a moveable member, which in this case is a translator 14. The stator 12 is not necessarily completely stationary but rather is substantially stationary in comparison to the moveable member.

In this embodiment, the stator 12 is depicted as a first and second stator 12 but it should be appreciated that other arrangements of the stator 12 are possible.

The stator 12 is made up of permanent magnets 16, which are placed along side each other with alternating polarity. In Fig. 1, each magnet 16 is depicted with a positive polarity end shown hatched and a negative polarity end shown blank. The translator 14 is similarly made up of alternating polarity permanent magnets 17.

In use, the translator 14 is moved by a force 18 in relation to the stator 12. For simplicity, if it is assumed that the force 18 is a sine wave, the translator 14 will move back and forth within the stator 12. As the translator 14 is moved, each of the permanent magnets 17 are attracted and repelled according to the polarity of the permanent magnets 16 on the stator 12.

For example, the translator 14 is pulled in the direction indicated by the force 18. The permanent magnets 17 are firstly attracted towards position A. Once the permanent magnets reach position A however they are repelled from reaching position B. This attraction and repulsion provides a "snapping" movement of the translator 14 as it moves in relation to the stator 12.

A complete cycle of the snapping movement represents two permanent magnet widths. Fig. 2 shows the restoring force of the permanent magnets versus the displacement for one cycle of the snapping movement. Its precise form will not be sinusoidal but the need for mechanical clearance will introduce space for fringe magnetic fields that attenuate harmonic components in the spatial flux distribution so the characteristic will be closely approximated by a sine wave.

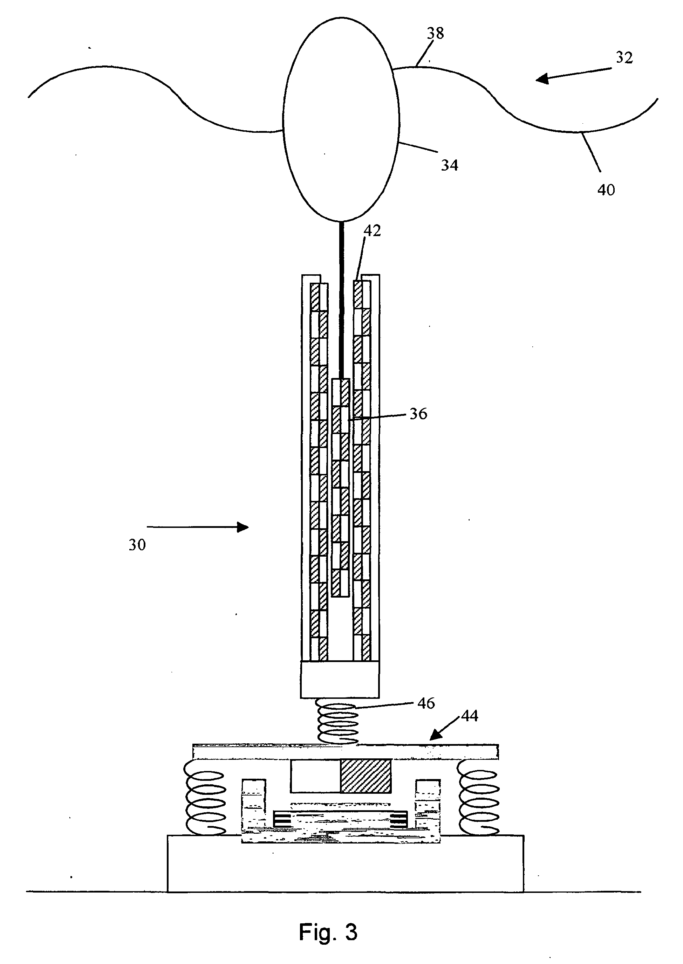

Referring now to Fig. 3, a wave power generation system 30 is shown. Waves 32 are generated naturally in large expanses of water by wind and tide. Harnessing the movement of water is generally considered a sustainable energy source unlike finite resources such as oil and coal. In addition, it is also considered to be environmentally friendly as there are no harmful by-products unlike, for example, nuclear power.

A buoy 34 is connected to a translator 36. The buoy 34 floats on the waves 32 such that the buoy 34 and the translator 36 are propelled upwards when a wave peak 38 reaches the system 30. When a wave trough 40 reaches the system 30 the buoy 34 is propelled downwards due to the weight of the translator 36 and buoy 34. Wave motion is thereby converted from a sinusoidal movement of the waves 32 to a linear movement of the buoy 34 and translator 36.

A stator 42 surrounds the translator 36. The stator 42 is resiliently connected to a reciprocating linear generator 44. In this example, the resilient connector is a spring 46.

In use, the movement of the translator 36 due to wave motion is at a relatively low frequency. The stator 42 has some movement enabled by the spring 46 towards and away from the buoyant device 34. The alternate attraction and repulsion of the stator 42 to the translator 36, as the translator 36 is moved by waves, introduces movement of the stator 42. Movement of the stator 42 is of a higher frequency that that of the original movement of the translator and is related to the width of the magnetic forces along the length of the translator 42 and stator 36.

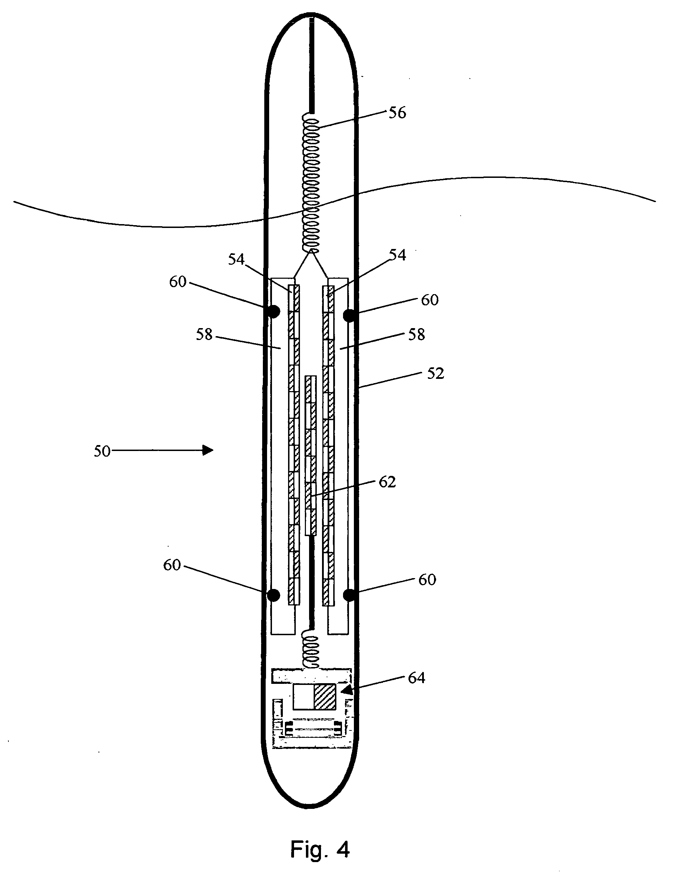

Referring now to Fig. 4 an alternative embodiment of a wave power generation system 50 is shown. A buoyant outer casing 52 resiliently supports a translator 54. In this example, the resilient connector is a spring 56.

In the previous embodiment, the translator 36 was arranged inside the stator 42. However, in this embodiment, the translator 54 is arranged outside a stator 62. The translator 54 is connected to a reaction mass 58. The reaction mass 58 is mounted on runners 60 which allows movement of the reaction mass 58 and translator 54 within the casing 52. The stator 62 is resiliently connected to a linear reciprocating generator 64.

The buoyant outer casing 52 allows the wave power generation system 50 to be free floating in a sea area with sufficient wave motion. The wave power generation system 50 would typically be anchored to the seabed but, as the system 50 is self-supporting, would have excellent survival properties.

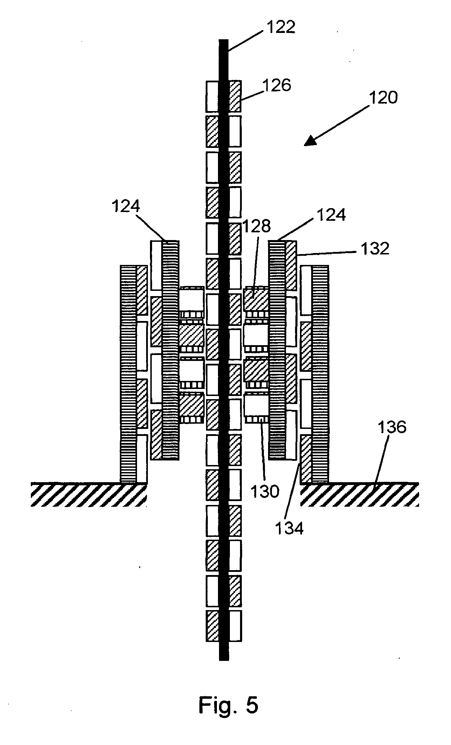

Referring now to Fig. 5, a power generation system 120 comprises a translator 122 and stator 124. The translator 122 has a first plurality of permanent magnets 126 of alternating polarity. The stator 124 has a second plurality of permanent magnets 128 of alternating polarity. The second plurality of magnets 128 each have a coil 130, in this case of copper wire, wrapped around them. The coils 130 are connected to an electrical circuit (not shown). Reciprocating movement of the stator 124 in relation to the translator 122 induces a voltage in the coils 130. The induced voltage can then be used by the electrical circuit either for storage of electrical charge, such as in a capacitor, or for powering additional circuits. Typically, additional circuits are utilised to smooth the voltage from the coils 130 as necessary.

By having the electrical generator within the stator itself, the need for a separate electrical generator, such as a linear generator, is removed. This provides many advantages such as improved efficiency and reduction in components, materials and weight.

The stator 124 also has a third plurality of permanent magnets 132 of alternating polarity attached opposite to that of the second plurality of magnets 128. A fourth plurality of permanent magnets 134 of alternating polarity are fixed to a base 136. The base 136 is relatively static in comparison to the stator 124 and translator 122. The third and fourth permanent magnets 132, 134 have a greater pole pitch than that of the first and second permanent magnets 126, 128. That is, there is a greater spacing between the centre of each magnet in the third and fourth permanent magnets 132, 134 than that of the first and second permanent magnets 126, 128. This enables the third and fourth permanent magnets to act as a magnetic spring and provide resilient reciprocating movement of the stator 124 when the translator 122 moves.

By utilising a magnetic spring the need for a traditional spring or other resilient component is removed. For the present invention to work effectively with a traditional spring, the mass of the spring would be considerable to produce an appropriate power output. A magnetic spring reduces the mass required to provide the resilient means and the likelihood of failures due to wear.

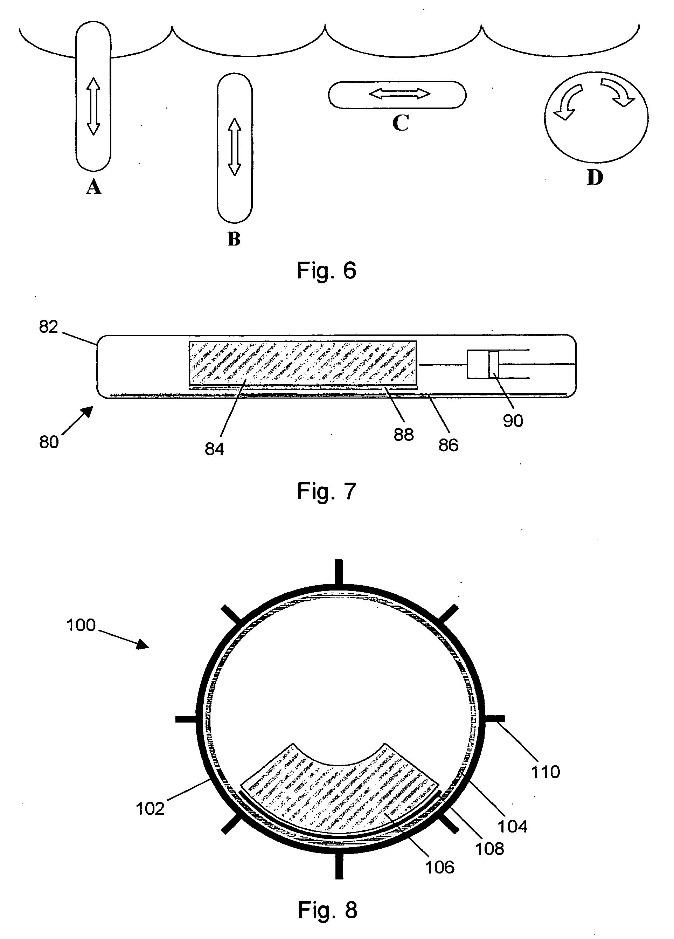

Referring now to Fig. 6, four example configurations of wave power generation systems are shown. A structure floating freely within the sea is subject to 6 degrees of freedom, three linear and three rotational. These are known as heave, sway and surge linear motions and pitch, roll and yaw rotational motions. System A is as described in Fig. 4 above and is subject to vertical lift (or heave) due to the varying level of the sea surface. System B is a submerged version of system A, but would generally operate on the same principles, and is subject to vertical force by the action of drag between the system and the water's vertical motion. System C is positioned horizontally with respect to the surface of the sea and is subject to horizontal force by the action of drag between the system and the water's horizontal surge. System C is described in more detail below with reference to Fig. 7. System D is a cylindrical or spherical system that rotates due to drag between the system D and the general rotation of the water corresponding to wave action. System D is described in more detail below with reference to Fig. 8.

Referring to Fig. 7, an alternative embodiment of a wave power generation system 80 comprises a horizontally positioned outer body 82, a moveable member 84, a stator 86, a low friction surface 88 and a generator 90. The member 84 and the stator 86 comprise permanent magnets as described previously to enable mechanical frequency conversion. The moveable member 84 is supported without the need for a resilient means, such as a spring. Instead, the member 84 is supported by the low friction surface 88, which may be, for example, a set of spherical rollers. If the system 80 is orientated to the direction of wave travel, the member 84 may be allowed a single degree of freedom and would move back and forth in a single direction with the surge of the waves. Furthermore, the system 80 may also allow the member 84 two degrees of freedom, that is allow the member 84 to move around a plane. In this instance it would not be required to orientate the system 80 with the direction of wave travel. For example, the member 84 may be a disc shaped mass in the outer body 82, which is a hollow disc shaped container. The member 84 could also be spherical and be allowed to roll about within the body 82. If it is required to keep the mass more or less centred then it may be held by resilient means, such as springs, or by forming the body 82 into a concave shape.

Referring to Fig. 8, an alternative embodiment of a wave power generation system 100 comprises an outer body 102, which may be cylindrical or spherical, a moveable member, in this case a rotator 104, a stator 106, a low friction surface 108 and a plurality of paddles 110. The rotator 104 and the stator 106 comprise permanent magnets as described previously to enable mechanical frequency conversion. A generator (not shown) may be coupled to the stator 106 to extract electrical power. As mentioned, the body 102 could be cylindrical if aligned across the direction of wave travel. In this case, the relative movement of the rotator 104 and the body 102 would be about a single axis. Alternatively, the body 102 could be spherical and the coupling to the generator would need to permit two-axis movement of the rotator 104.

The system 100 shown in Fig. 8 may be a section through either a spherical or a cylindrical version. In either case, the system 100 employs the weight of the onboard stator 106 to provide a reaction torque against continuous motion, whereas the other systems use the inertia to provide a reaction force due to acceleration under reciprocating motion.

The system 100 is described in terms of the stator 106 being inside the rotator 104 and as such there is radial magnetic flux. The stator 106 and rotator 104 may also be in the form of discs on the same axis with the first and second plurality of magnets on opposing surfaces of each disc. In this case, there would be an axial magnetic flux.

The use of pneumatic, water, hydraulic or mechanical wave to generator intermediaries all impose a 'wave to wire' added system inefficiency. The present invention, via its electro-magnetic configurations, offers the opportunity to operate a system without imposing in the system the inefficiency penalty associated with each of the above intermediaries.

Furthermore, the present invention provides significant advantages over a typical linear generator. These advantages include increased efficiency in relation to mass of materials and subsequently a reduction in cost of production for a similar power output. For example, a design according to the present invention with a magnetic spring requires a mass of magnets amounting to 342Kg, a mass of black iron amounting to 329Kg and a mass of coils, or windings, of 13Kg. This design gives an output power of approximately 90kW for a 3m wave height with a period of 7 seconds at an efficiency of 75% and of approximately 143kW for a 4m wave height with a period of 8 seconds at an efficiency of 71 %. A linear generator requires a mass of magnets of 608Kg, mass of black iron of 1866Kg, mass of windings of 1531 Kg and a mass of teeth, which the windings are wrapped round, of 2116Kg to produce 77kW at 75% efficiency for the same 3m wave and 106kW at 74% efficiency for the same 4m wave.

Modifications and improvements may be incorporated without departing from the scope of the invention as defined by the appended claims.

The present invention provides a means of directly converting low frequency oscillations into high frequency oscillations. This is particularly suitable for electrical generation but may be used in other devices. For example, the magnetic force transmission may be used to power a pump.

Further aspects of the invention are recited in the following lettered paragraphs:
A. A magnetic force transmission apparatus comprising:
   a moveable member, wherein the member comprises a first plurality of magnetic zones of alternating polarity; and
   a stator, wherein the stator comprises a second plurality of magnetic zones of alternating polarity,
   wherein applying a first force to the member provides a second force from the stator, the second force having a reciprocating motion.
B. A magnetic force transmission apparatus as described in paragraph A, wherein the first force is a reciprocating force, the second force being of a higher frequency than the first force.
C. A magnetic force transmission apparatus as described in paragraph A or paragraph B, wherein the member is a translator.
D. A magnetic force transmission apparatus as described in paragraph A, wherein the first force is a substantially continuous force, the second force being a pulsed force.
E. A magnetic force transmission apparatus as described in paragraph D, wherein the member is a rotator.
F. A magnetic force transmission apparatus as described in any of paragraphs A to E, wherein the reciprocating motion of the second force is provided by a resilient means.
G. A magnetic force transmission apparatus as described in paragraph F, wherein the resilient means is a helical spring.
H. A magnetic force transmission apparatus as described in paragraph F, wherein the resilient means is a magnetic spring.
I. A magnetic force transmission apparatus as described in any of paragraphs A to H, wherein the first and second plurality of magnetic zones comprise permanent magnets.
J. A magnetic force transmission apparatus as described in paragraph I, wherein the permanent magnets are rare-earth permanent magnets or ferrite permanent magnets.
K. A power generation system comprising:
   a moveable member, wherein the member comprises a first plurality of magnetic zones of alternating polarity; and
   a stator, wherein the stator comprises a second plurality of magnetic zones of alternating polarity;
   an electrical power generator connected to one of the stator or the member; and
   a first force applied to the other of the stator or the member,
   wherein the first and second plurality of magnetic zones provides a reciprocating second force to the generator when the first force is applied thereby providing an electrical power output.
L. A power generation system as described in paragraph K, wherein the electrical power generator comprises a plurality of coils around one of the first or second plurality of magnetic zones, the coils having an induced voltage due to the reciprocating second force.
M. A power generation system as described in paragraph K or paragraph L, wherein the power generation system is a wave power generation system.
N. A power generation system as described in any of paragraphs K to M, wherein the first force is a reciprocating force generated by a reciprocating means.
O. A power generation system as described in paragraph N, wherein the reciprocating means reciprocates in any one of the six degrees of freedom associated with structures floating in the sea, namely surge, pitch, roll, heave and sway.
P. A power generation system as described in paragraph N or paragraph O, wherein the reciprocating means comprises a buoyant device.
Q. A power generation system as described in paragraph P, wherein the buoyant device is a buoy on the surface of the sea.
R. A power generation system as described in paragraph P, wherein the buoyant device is a body enclosing the power generation system.
S. A power generation system as described in paragraph R, wherein the body has enough buoyancy such that the system floats on the sea surface.
T. A power generation system as described in paragraph R, wherein the body has buoyancy such that the system floats below the sea surface.
U. A power generation system as described in any of paragraphs N to T, wherein the first force is generated by the stator or member's mass.
V. A power generation system as described in any of paragraphs M to O, wherein a body enclosing the power generation system is spherical.
W. A power generation system as described in any of paragraphs M to O, wherein a body enclosing the power generation system is cylindrical.
X. A power generation system as described in paragraph V or paragraph W, wherein the first force is generated by rotational movement of the body.
Y. A power generation system as described in paragraph X, wherein the body has a plurality of paddles on its outer surface providing a greater rotational movement.

## Claims

1. A power generation system comprising:
- a moveable member (36, 54, 84, 104, 122) comprising a first plurality of magnetic zones of alternating polarity; and
- a stator (42, 62, 86, 106, 124) comprising a second plurality of magnetic zones of alternating polarity and arranged to face the first plurality of magnetic zones, wherein the first and second plurality of magnetic zones have the same pole pitch; and
- an electrical power generator (44, 64, 90, 128) connected to one of the stator or the member;
**characterised in that** the member and stator are arranged to move relative to each other across an air gap in a single degree of freedom, whereby the power generation system is constructed such that when a first reciprocating force is applied to the member (36, 54, 84, 102, 122) to move the same in a corresponding reciprocating motion, the first reciprocating force is transmitted to the stator by alternate attraction and repulsion between the first and second plurality of magnetic zones during said movement to reciprocally move the stator (42, 62, 86, 106, 124) and provides a second reciprocating force from the stator of higher frequency relative to the first force and this said reciprocating second force is applied to the generator thereby providing an electrical power output.

2. A power generation system as claimed in claim 1, wherein the electrical power generator comprises a plurality of coils (128) around one of the first or second plurality of magnetic zones, the coils having an induced voltage due to the reciprocating second force.

3. A power generation system as claimed in any preceding claim, wherein movement of the stator is provided by resilient means.

4. A power generation system as claimed in claim 3 wherein the resilient means comprises a helical spring (46, 56).

5. A power generation system as claimed in claim 3 wherein the resilient means comprises a magnetic spring (132, 134).

6. A power generation system as claimed in any preceding claim, wherein the first reciprocating force is generated by a reciprocating means comprising a buoyant device consisting of a body (52, 82, 102) enclosing the power generation system.

7. A power generation system as claimed in claim 6, wherein the body is adapted such that the system floats on or below the surface of the sea.

8. A power generation system as claimed in claim 6 or 7 when further only dependent on claim 1 or 2, wherein the body (102) enclosing the power generation system is spherical.

9. A power generation system as claimed in claim 6 or 7, wherein a body (52, 82) enclosing the power generation system is cylindrical.

10. A power generation system as claimed in claim 8 or 9, wherein the first force is generated by rotational movement of the body.

11. A power generation system as claimed in any of claims 6 to 10, wherein the first force is generated by the stator's or member's mass.

12. A power generation system as claimed in claim 10, wherein the body has a plurality of paddles on its outer surface providing a greater rotational movement.

## Patentansprüche

1. Ein Stromerzeugungssystem, das Folgendes beinhaltet:
- ein bewegliches Element (36, 54, 84, 104, 122), das eine erste Vielzahl von Magnetbereichen wechselnder Polarität beinhaltet; und
- einen Stator (42, 62, 86, 106, 124), beinhaltend eine zweite Vielzahl von Magnetbereichen wechselnder Polarität und eingerichtet, um der ersten Vielzahl von Magnetbereichen gegenüberzuliegen, wobei die erste und die zweite Vielzahl von Magnetbereichen die gleiche Polteilung aufweisen; und
- einen Erzeuger elektrischen Stroms (44, 64, 90, 128), der mit einem von dem Stator oder dem Element verbunden ist;
**dadurch gekennzeichnet, dass** das Element und der Stator eingerichtet sind, um sich relativ zueinander über einen Luftspalt in einem einzigen Freiheitsgrad zu bewegen, wobei das Stromerzeugungssystem so konstruiert ist, dass, wenn eine erste hin- und hergehende Kraft auf das Element (36, 54, 84, 102, 122) angewendet wird, um dieses in einem entsprechenden hin- und hergehenden Bewegungsablauf zu bewegen, die erste hin- und hergehende Kraft durch wechselnde Anziehung und Abstoßung zwischen der ersten und der zweiten Vielzahl von Magnetbereichen während der Bewegung zum hin- und hergehenden Bewegen des Stators (42, 62, 86, 106, 124) auf den Stator übertragen wird und eine zweite hin- und hergehende Kraft von dem Stator mit höherer Frequenz relativ zu der ersten Kraft bereitstellt und diese hin- und hergehende zweite Kraft auf den Erzeuger angewendet wird, wodurch ein elektrischer Stromausgang bereitgestellt wird.

2. Stromerzeugungssystem gemäß Anspruch 1, wobei der elektrische Stromerzeuger eine Vielzahl von Spulen (128) um eine von der ersten oder der zweiten Vielzahl von Magnetbereichen beinhaltet, wobei die Spulen aufgrund der hin- und hergehenden zweiten Kraft eine induzierte Spannung aufweisen.

3. Stromerzeugungssystem gemäß einem der vorhergehenden Ansprüche, wobei die Bewegung des Stators durch ein elastisches Mittel unterstützt wird.

4. Stromerzeugungssystem gemäß Anspruch 3, wobei das elastische Mittel eine Schraubenfeder (46, 56) beinhaltet.

5. Stromerzeugungssystem gemäß Anspruch 3, wobei das elastische Mittel eine Magnetfeder (132, 134) beinhaltet.

6. Stromerzeugungssystem gemäß einem der vorhergehenden Ansprüche, wobei die erste hin- und hergehende Kraft durch ein hin- und hergehendes Mittel erzeugt wird, das eine schwimmfähige Vorrichtung beinhaltet, die aus einem Körper (52, 82, 102) besteht, der das Stromerzeugungssystem umschließt.

7. Stromerzeugungssystem gemäß Anspruch 6, wobei der Körper so angepasst ist, dass das System auf oder unter der Meeresoberfläche schwimmt.

8. Stromerzeugungssystem gemäß Anspruch 6 oder 7, wenn ferner nur von Anspruch 1 oder 2 abhängig, wobei der Körper (102), der das Stromerzeugungssystem umschließt, kugelförmig ist.

9. Stromerzeugungssystem gemäß Anspruch 6 oder 7, wobei ein Körper (52, 82), der das Stromerzeugungssystem umschließt, zylinderförmig ist.

10. Stromerzeugungssystem gemäß Anspruch 8 oder 9, wobei die erste Kraft durch eine Drehbewegung des Körpers erzeugt wird.

11. Stromerzeugungssystem gemäß einem der Ansprüche 6 bis 10, wobei die erste Kraft durch die Masse des Stators oder Elements erzeugt wird.

12. Stromerzeugungssystem gemäß Anspruch 10, wobei der Körper eine Vielzahl von Schaufeln auf seiner äußeren Oberfläche aufweist, die eine größere Drehbewegung unterstützen.

## Revendications

1. Un système de génération de puissance comprenant :
- un élément mobile (36, 54, 84, 104, 122) comprenant une première pluralité de zones magnétiques de polarité alternée ; et
- un stator (42, 62, 86, 106, 124) comprenant une deuxième pluralité de zones magnétiques de polarité alternée et agencé pour faire face à la première pluralité de zones magnétiques, dans lequel la première et la deuxième pluralité de zones magnétiques ont le même pas polaire ; et
- un générateur de puissance électrique (44, 64, 90, 128) raccordé soit au stator, soit à l'élément ;
**caractérisé en ce que** l'élément et le stator sont agencés pour se déplacer l'un par rapport à l'autre de part et d'autre d'un intervalle d'air selon un degré de liberté unique, grâce à quoi le système de génération de puissance est construit de telle sorte que lorsqu'une première force de va-et-vient est appliquée sur l'élément (36, 54, 84, 102, 122) pour déplacer celui-ci dans un mouvement de va-et-vient correspondant, la première force de va-et-vient soit transmise au stator par attraction et répulsion alternées entre la première et la deuxième pluralité de zones magnétiques durant ledit déplacement pour déplacer de façon réciproque le stator (42, 62, 86, 106, 124) et fournit une deuxième force de va-et-vient depuis le stator de fréquence plus élevée par rapport à la première force et cette dite deuxième force de va-et-vient est appliquée sur le générateur fournissant de ce fait une sortie de puissance électrique.

2. Un système de génération de puissance tel que revendiqué dans la revendication 1, dans lequel le générateur de puissance électrique comprend une pluralité de bobines (128) autour de soit la première, soit la deuxième pluralité de zones magnétiques, les bobines ayant une tension induite due à la deuxième force de va-et-vient.

3. Un système de génération de puissance tel que revendiqué dans n'importe quelle revendication précédente, dans lequel le déplacement du stator est fourni par un moyen élastique.

4. Un système de génération de puissance tel que revendiqué dans la revendication 3 dans lequel le moyen élastique comprend un ressort hélicoïdal (46, 56).

5. Un système de génération de puissance tel que revendiqué dans la revendication 3 dans lequel le moyen élastique comprend un ressort magnétique (132, 134).

6. Un système de génération de puissance tel que revendiqué dans n'importe quelle revendication précédente, dans lequel la première force de va-et-vient est générée par un moyen de va-et-vient comprenant un dispositif insubmersible consistant en un corps (52, 82, 102) englobant le système de génération de puissance.

7. Un système de génération de puissance tel que revendiqué dans la revendication 6, dans lequel le corps est conçu de telle sorte que le système flotte sur ou en dessous de la surface de la mer.

8. Un système de génération de puissance tel que revendiqué dans la revendication 6 ou la revendication 7 lorsqu'elle dépend en outre seulement de la revendication 1 ou la revendication 2, dans lequel le corps (102) englobant le système de génération de puissance est sphérique.

9. Un système de génération de puissance tel que revendiqué dans la revendication 6 ou la revendication 7, dans lequel un corps (52, 82) englobant le système de génération de puissance est cylindrique.

10. Un système de génération de puissance tel que revendiqué dans la revendication 8 ou la revendication 9, dans lequel la première force est générée par un déplacement rotatif du corps.

11. Un système de génération de puissance tel que revendiqué dans n'importe lesquelles des revendications 6 à 10, dans lequel la première force est générée par la masse de stator ou de l'élément.

12. Un système de génération de puissance tel que revendiqué dans la revendication 10, dans lequel le corps a une pluralité de pagaies sur sa surface extérieure fournissant un déplacement rotatif plus grand.
